# EUROPÄISCHE PATENTSCHRIFT

(11) **EP 2 101 997 B1**
(45) Veröffentlichungstag und Bekanntmachung des Hinweises auf die Patenterteilung: **26.10.2016**
(21) Anmeldenummer: 07847828.6
(22) Anmeldetag: 05.12.2007
(51) Int. Cl.: B32B 25/08, C08K 3/18

(54) **VERWENDUNG EINER FLAMMHEMMENDEN SILIKONKAUTSCHUKMISCHUNG ZUR HERSTELLUNG VON MEHRSCHICHTIGEN STOFFBAHNEN, INSBESONDERE ZUR BILDUNG VON FALTENBÄLGEN**
USE OF A FLAME-RETARDANT, SILICONE RUBBER MIX FOR PRODUCING MULTIPLE-LAYER MATERIAL WEBS, IN PARTICULAR FOR FORMING FOLDING BELLOWS
UTILISATION D'UN MÉLANGE DE CAOUTCHOUC DE SILICONE IGNIFUGE POUR LA FABRICATION DE BANDES DE TISSUS MULTICOUCHES, NOTAMMENT POUR LA FABRICATION DE SOUFFLETS

(30) Priorität: 12.12.2006 DE 102006058470
(43) Veröffentlichungstag der Anmeldung: 23.09.2009
(73) Patentinhaber: ContiTech Elastomer-Beschichtungen GmbH, 30165 Hannover (DE)
(72) Erfinder: LÖSCHNER, Jens, 37120 Bovenden (DE); KISSER, Stefan, 37081 Göttingen (DE)
(74) Vertreter: Finger, Karsten
(86) Internationale Anmeldenummer: PCT/EP2007/063333
(87) Internationale Veröffentlichungsnummer: WO 2008/071604

(56) Entgegenhaltungen:
- EP-A- 0 899 305
- US-A- 4 255 483
- US-A- 5 025 058

## Beschreibung

Aus der Offenlegungsschrift DE 44 22 048 A1 ist die Verwendung einer Silikonkautschukmischung zur Herstellung von drehelastischen Kupplungen, beispielsweise Schiffskupplungen, bekannt. Als Silikonkautschuk kommen dabei insbesondere folgende Typen zur Anwendung:
- Polydimethylsiloxankautschuk (MQ)
- Polydimethyl/vinylmethylsiloxankautschuk (VMQ)
- Polydimethyl/vinylmethyl-/diphenylsiloxankautschuk (PVMQ)
- Poly-γ-trifluorpropyl-/vinyltrifluorpropylsiloxankautschuk (FVMQ)

Die vulkanisierte Kautschukmischung bildet dabei mit Metallteilen einen hochbelastbaren wie auch hitzestabilen Metall-Elastomer-Verbund.

Darüber hinaus werden Silikonkautschukmischungen zur Herstellung von Extrusionsartikeln, insbesondere von Schläuchen, Dichtprofilen und Dichtringen, sowie von Klärbeckenmembranen (DE 102 58 551 A1) verwendet. Einen weiteren Anwendungsbereich dieses Werkstoffes bilden die medizinisch-pharmazeutischen Artikel wie auch Lebensmittelverpackungen.

Die Patentschrift US 4 255 483 offenbart ein flammgehemmtes Laminat, wobei eine Festigkeitsträgerschicht auf der Basis eines Glasgewebes mit einem Harz imprägniert ist. Als Harz wird dabei beispielsweise ein Silikonharz eingesetzt.

In der Patentschrift US 5 025 058 wird eine flammhemmende Spachtelmasse beschrieben, und zwar beispielsweise unter Einsatz einer Silikonkautschukmischung.

In der Offenlegungsschrift EP 0 899 305 A2 wird eine flammhemmende Silikonkautschukmischung für beschichtete elektrische Kabel offenbart.

Obwohl zahlreiche käufliche Silikonkautschukmischungen zur Verfügung stehen, die extrudierbar wie auch kalandrierbar sind, hat sich dieser elastische Werkstoff bislang nicht zur Herstellung von technischen Bahnen mit flammhemenden Eigenschaften durchsetzen können. Diesbezüglich wurden andere Wege beschritten, die nun aufgezeigt werden.

In der Patentschrift EP 1 097 280 B1 werden Dichtungsbahnen, insbesondere zur Abdeckung von Dächern, vorgesellt, wobei diese mehrschichtigen Bahnen eine flammhemmende Festigkeitsträgerschicht aus einem Glasgelege, Glasgewebe, einem Gelege aus einem ausgeschrumpften Polyester oder einem Vlies aufweisen. Die Oberschicht ist aus einem thermoplastischen Elastomer (TPE) gebildet. Die Unterschicht besteht aus einer polymermodifizierten, selbstklebenden Bitumenmasse. Mit Hilfe der TPE-Schicht und Bitumenschicht können beispielsweise zwei oder mehrere Dichtungsbahnen durch Überlappung ihrer Längsränder klebend zusammengefügt werden.

Aus der Patentschrift EP 1 326 745 B1 ist ferner ein flexibles Laminatbahnmaterial für Feuerschutzanzüge bekannt. Diese Bahn besteht dabei aus einer ersten Schicht in Form einer Folie aus temperaturbeständigem Polymermaterial sowie aus einer zweiten Schicht aus nichtmetallischen Fasern. Diese beiden Schichten sind mittels einer Haftschicht miteinander verbunden. Als Folienwerkstoffe kommen Polyamide (PA), Polyvinylfluorid (PVF), Polytetrafluorethylen (PTFE) sowie Silikonharze zur Anwendung. Die zweite Schicht ist aus Glasfasern, Aramidfasern, Keramikfasern, Siliciumnitridfasern oder Siliciumcarbidfasern gebildet. Die Wirksamkeit der Feuerschutzanzüge kommt hier durch die Kombination beider Schichten zum Tragen, wobei die nichtmetallischen Fasern die flammhemmende Grundwirkung übernehmen.

Besondere Bedeutungen haben mehrschichtige Stoffbahnen zur Bildung von flexiblen Behältern, Zelten, Planen, Membranen, Schutzanzügen, Faltenbälgen und dergleichen. Diese Stoffbahnen weisen wenigstens eine Festigkeitsträgerschicht in Form einer Gewebeschicht auf, die in Gummi eingebettet ist. Man nennt diese Stoffbahnen daher auch gummiertes Gewebe. Als Kautschukkomponenten kommen bislang insbesondere Nitrilkautschuk (NBR), Polychloropren (CR), Ethylen-Propylen-Dien-Mischpolymerisat (EPDM), Butylkautschuk (IIR) und Chlorsulfoniertes Polyethylen (CSM) sowie Verschnitte, beispielsweise aus NBR/CR oder EPDM/NBR, zum Einsatz. Zur Verbesserung der Schutzfunktion werden in diese Stoffe zumeist Folienbahnen eingearbeitet, insbesondere auf der Basis des bereits oben genannten PVF sowie von Polyvinylidenfluorid (PVDF). Hinsichtlich des diesbezüglichen Standes der Technik wird insbesondere auf folgende Druckschriften verwiesen: DE 42 32 947 A1, DE 43 08 728 A1, DE 102 08 557 B4, 10 2004 031 337 A1 und WO 94/11187 A1.

Aufgabe der Erfindung ist es, eine kalandrierbare Silikonkautschukmischung mit flammhemmenden Eigenschaften zur Herstellung von mehrschichtigen Stoffbahnen, die wenigstens eine Festigkeitsträgerschicht, insbesondere in Form einer Gewebeschicht, aufweisen, zu verwenden.

In die Silikonkautschukmischung ist dabei wenigstens ein flammhemmender Füllstoff eingemischt, der innerhalb der Silikonkautschukmischung gleichmäßig verteilt ist und dessen Mengenanteil 40 bis 140 phr beträgt. Die Festigkeitsträgerschicht ist dabei ein- oder insbesondere beidseitig mit einer Schicht versehen, die aus dieser flammhemmenden Silikonkautschukmischung besteht.

Der flammhemmende Füllstoff ist vorzugsweise ein anorganisches Material der folgenden Gruppen (A, B, C):
(A) Metallcarbonate: Calciumcarbonat, Magnesiumcarbonat
(B) Metallhydroxide: Calciumhydroxid, Magnesiumhydroxid, Aluminiumhydroxid
(C) Glaspulver, Quarzpulver

Auch eine Kombination der oben genannten Materialien der Gruppen (A, B, C), beispielsweise Calciumcarbonat und Magnesiumhydroxid, kann eingesetzt werden. Neben der flammhemmenden Wirkung dieser anorganischen Substanzen zeichnen sich diese durch eine hohe Polarität aus, verbunden mit einer optimalen Wechselwirkung mit den Siliciumatomen des Silikonkautschuks, so dass dieser Füllstoff gleichmäßig in die Polymermatrix einmischbar ist, und zwar bei einem hohen Mengenanteil des Füllstoffes, und zwar in einem Bereich von 40 bis 140 phr (per hundred rubber). Eine Versuchsreihe hat dabei ergeben, dass bei einem Mengenanteil von 60 bis 120 phr an Füllstoff die besten Ergebnisse erzielt werden, auch unter dem Aspekt der Kalandrierbarkeit.

In die Silikonkautschukmischung sind neben dem flammhemmenden Füllstoff vorzugsweise weitere Zusatzstoffe, umfassend wenigstens ein Vernetzungsmittel und einen Hitzestabilisator, beigemischt. Verwendet werden dabei insbesondere peroxidische Vernetzungsmittel, beispielsweise auf der Basis von Diaroylperoxiden (z.B. Dibenzoylperoxid) oder von Dialkylperoxiden (z.B. Di-tert.-butylperoxid). Nach der Vulkanisation zeichnet sich die Silikonkautschukmischung bei hoher Flammfestigkeit durch den eingemischten Füllstoff zudem durch eine hohe Elastizität aus.

Weitere Mischungsingredienzien können insbesondere anorganische Pigmente zur Farbgebung der mehrschichtigen Stoffbahn sein. Der Mengenanteil der Zusatzstoffe, umfassend Vernetzungsmittel, Hitzestabilisator, Kalanderhilfsmittel und Pigmente, beträgt vorzugsweise 10 bis 40 phr. Das Kalanderhilfsmittel ist beispielsweise ein PTFE-Pulver in einem Mengenbereich von 0,5 bis 2 phr. Bestehen die Zusatzstoffe lediglich aus dem Vernetzungsmittel und dem Hitzestabilisator, ist ein Mengenanteil von 1 bis 5 phr ausreichend.

Die käuflichen Silikonkautschuke beinhalten zumeist noch pyrogene Kieselsäure, die sich insbesondere in einem Mengenanteil von 30 bis 60 phr bewegt. Dieser aktive Füllstoff, der primär der besseren Verarbeitbarkeit des Silikonkautschuks dient, ist bei den in den Ansprüchen 1, 15, 18 und 19 genannten Mengenanteilen nicht berücksichtigt. Hinsichtlich der Mischungstechnologie von Silikonkautschukmischungen wird ansonsten auf die eingangs genannte Offenlegungsschrift DE 44 22 048 A1 verwiesen.

Zwecks Unterstützung der flammhemmenden Eigenschaft der mehrschichtigen Stoffbahn unter Verwendung der neuartigen Silikonkautschukmischung besteht die eingebettete Festigkeitsträgerschicht vorzugsweise aus einem Glasgewebe, Polyestergewebe (PES) oder einem Gewebe auf Basis Aramid, insbesondere wiederum Para-Aramid (p-Aramid) oder Meta-Aramid (m-Aramid).

Die Erfindung wird nun anhand eines Ausführungsbeispieles unter Bezugnahme auf eine schematische Zeichnung erläutert.

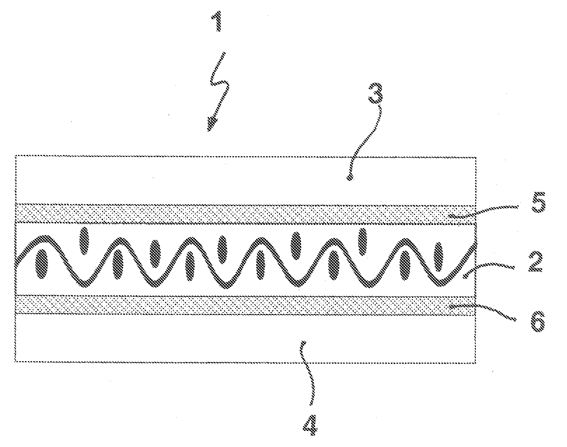

Nach der einzigen Figur umfasst die Stoffbahn 1 insgesamt fünf Schichten. Die mittig angeordnete Festigkeitsträgerschicht 2 ist eingebettet von zwei Schichten 3 und 4, die aus der flammhemmenden Silikonkautschukmischung bestehen und in Bezug auf die gesamte Stoffbahn die Außenschichten bilden. Zwischen der Festigkeitsträgerschicht und den beiden Silikonkautschukschichten ist jeweils eine Haftschicht vorhanden. Auf diese Weise wird ein hochbelastbarer Elastomer-Gewebe-Verbund gebildet. Als Haftmittel, beispielsweise in Form von Haftmischungen, kommen alle Klebesubstanzen in Frage, die für den Verbund von Gewebe und Kautschuk geeignet sind. Hinsichtlich der diesbezüglichen Technologie wird beispielsweise auf die Offenlegungsschrift DE 42 32 947 A1 verwiesen.

Die Stoffbahn 1 mit ihren flammhemmenden Eigenschaften bei hoher Elastizität ist insbesondere geeignet für die Bildung von Faltenbälgen, insbesondere wiederum als gelenkiges Bauteil von Bussen, Schienenfahrzeugen und Fluggastbrücken.

### Bezugszeichenliste

### (Teil der Beschreibung)

- 1: mehrschichtige Stoffbahn
- 2: Festigkeitsträgerschicht, insbesondere Gewebeschicht
- 3: flammhemmende Silikonkautschukschicht
- 4: flammhemmende Silikonkautschukschicht
- 5: Haftschicht
- 6: Haftschicht

## Patentansprüche

1. Verwendung einer Silikonkautschukmischung, in die wenigstens ein flammhemmender Füllstoff eingemischt ist, der innerhalb der Silikonkautschukmischung gleichmäßig verteilt ist und dessen Mengenanteil 40 bis 140 phr beträgt, zur Herstellung von mehrschichtigen Stoffbahnen (1), umfassend wenigstens eine eingebettete Festigkeitsträgerschicht (2), die ein- oder beidseitig mit einer Schicht (3, 4) versehen ist, die aus der flammhemmenden Silikonkautschukmischung besteht.

2. Verwendung nach Anspruch 1, wobei die Festigkeitsträgerschicht (2) beidseitig mit der flammhemmenden Silikonkautschukschicht (3, 4) versehen ist.

3. Verwendung nach Anspruch 1 oder 2, wobei die Stoffbahn (1) eine einzige Festigkeitsträgerschicht (2) aufweist.

4. Verwendung nach einem der Ansprüche 1 bis 3, wobei zwischen der Festigkeitsträgerschicht (2) und der flammhemmenden Silikonkautschukschicht (3, 4) eine Haftschicht (5, 6) angeordnet ist.

5. Verwendung nach Anspruch 2, 3 und 4, wobei die Stoffbahn (1) fünfschichtig ausgebildet ist, und zwar umfassend eine mittig angeordnete Festigkeitsträgerschicht (2), eine erste und zweite flammhemmende Silikonkautschukschicht (3, 4) und eine erste und zweite Haftschicht (5, 6).

6. Verwendung nach einem der Ansprüche 1 bis 5, wobei die Festigkeitsträgerschicht (2) ein Glasgewebe oder ein Polyestergewebe ist.

7. Verwendung nach einem der Ansprüche 1 bis 5, wobei die Festigkeitsträgerschicht (2) ein Gewebe auf Basis Aramid ist.

8. Verwendung nach Anspruch 7, wobei die Festigkeitsträgerschicht (2) ein Gewebe auf Basis Para-Aramid und/oder Meta-Aramid ist.

9. Verwendung nach einem der Ansprüche 1 bis 8, wobei der flammhemmende Füllstoff ein Metallcarbonat ist (Gruppe A).

10. Verwendung nach Anspruch 9, wobei der flammhemmende Füllstoff Calciumcarbonat und/oder Magnesiumcarbonat ist.

11. Verwendung nach einem der Ansprüche 1 bis 8, wobei der flammhemmende Füllstoff ein Metallhydroxid ist (Gruppe B).

12. Verwendung nach Anspruch 11, wobei der flammhemmende Füllstoff Calciumhydroxid und/oder Magnesiumhydroxid und/oder Aluminiumhydroxid ist.

13. Verwendung nach einem der Ansprüche 1 bis 8, wobei der flammhemmende Füllstoff Glaspulver und/oder Quarzpulver ist (Gruppe C).

14. Verwendung nach einem der Ansprüche 9 bis 13, wobei der flammhemmende Füllstoff eine Kombination der vorgenannten anorganischen Materialien (Gruppen A, B, C) ist.

15. Verwendung nach einem der Ansprüche 1 bis 14, wobei der Mengenanteil des flammhemmenden Füllstoffes 60 bis 120 phr beträgt.

16. Verwendung nach einem der Ansprüche 1 bis 15, wobei neben dem flammhemmden Füllstoff weitere Zusatzstoffe, umfassend wenigstens ein Vernetzungsmittel und einen Hitzestabilisator, insbesondere in Verbindung mit einem Kalanderhilfsmittel, in die Silikonkautschukmischung eingemischt sind.

17. Verwendung nach Anspruch 16, wobei ein peroxidisches Vernetzungsmittel in die Silikonkautschukmischung eingemischt ist.

18. Verwendung nach Anspruch 16 oder 17, wobei der Mengenanteil der Zusatzstoffe 1 bis 40 phr beträgt.

19. Verwendung nach Anspruch 18, wobei der Mengenanteil der Zusatzstoffe 10 bis 40 phr beträgt.

20. Verwendung nach einem der Ansprüche 1 bis 19, wobei aus der mehrschichtigen Stoffbahn (1) ein Faltenbalg gebildet wird.

21. Verwendung nach Anspruch 20, wobei der Faltenbalg als Gelenkteil für Busse, Schienenfahrzeuge und Fluggastbrücken dient.

## Claims

1. Use of a silicone rubber mixture with, incorporated by mixing therein, at least one flame-retardant filler, which has uniform distribution within the silicone rubber mixture and the quantitative proportion of which is from 40 to 140 phr, for the production of multilayer fabric webs (1) comprising at least one embedded reinforcement layer (2) which has, on one or both sides, a layer (3, 4) composed of the flame-retardant silicone rubber mixture.

2. Use according to Claim 1, where the reinforcement layer (2) has the flame-retardant silicone rubber layer (3, 4) on both sides.

3. Use according to Claim 1 or 2, where the fabric web (1) has a single reinforcement layer (2).

4. Use according to any of Claims 1 to 3, where there is an adhesive layer (5, 6) arranged between the reinforcement layer (2) and the flame-retardant silicone rubber layer (3, 4).

5. Use according to any of Claims 2, 3 and 4, where the fabric web (1) has five layers, specifically comprising a centrally arranged reinforcement layer (2), a first and second flame-retardant silicone rubber layer (3, 4) and a first and second adhesive layer (5, 6).

6. Use according to any of Claims 1 to 5, where the reinforcement layer (2) is a woven glass fabric or a woven polyester fabric.

7. Use according to any of Claims 1 to 5, where the reinforcement layer (2) is a woven fabric based on aramid.

8. Use according to Claim 7, where the reinforcement layer (2) is a woven fabric based on para-aramid and/or meta-aramid.

9. Use according to any of Claims 1 to 8, where the flame-retardant filler is a metal carbonate (group A).

10. Use according to Claim 9, where the flame-retardant filler is calcium carbonate and/or magnesium carbonate.

11. Use according to any of Claims 1 to 8, where the flame-retardant filler is a metal hydroxide (group B).

12. Use according to Claim 11, where the flame-retardant filler is calcium hydroxide and/or magnesium hydroxide and/or aluminium hydroxide.

13. Use according to any of Claims 1 to 8, where the flame-retardant filler is glass powder and/or quartz powder (group C).

14. Use according to any of Claims 9 to 13, where the flame-retardant filler is a combination of the abovementioned inorganic materials (groups A, B, C).

15. Use according to any of Claims 1 to 14, where the quantitative proportion of the flame-retardant filler is from 60 to 120 phr.

16. Use according to any of Claims 1 to 15, where other additives comprising at least one crosslinking agent and one heat stabilizer, in particular in conjunction with a calendering aid, have been incorporated by mixing, alongside the flame-retardant filler, into the silicone rubber mixture.

17. Use according to Claim 16, where a peroxidic crosslinking agent has been incorporated by mixing into the silicone rubber mixture.

18. Use according to Claim 16 or 17, where the quantitative proportion of the additives is from 1 to 40 phr.

19. Use according to Claim 18, where the quantitative proportion of the additives is from 10 to 40 phr.

20. Use according to any of Claims 1 to 19, where a bellows is formed from the multilayer fabric web (1) .

21. Use according to Claim 20, where the bellows serves as articulation component for buses, rail vehicles and airline passenger boarding bridges.

## Revendications

1. Utilisation d'un mélange de caoutchouc de silicone dans lequel au moins une charge retardatrice de flamme est incorporée, qui est uniformément répartie à l'intérieur du mélange de caoutchouc de silicone et dont la proportion en poids est de 40 à 140 phr, pour la fabrication de feuilles continues multicouches (1) comprenant au moins une couche de renforcement incorporée (2), qui sur une face ou sur les deux faces est pourvue d'une couche (3, 4) qui est constituée du mélange de caoutchouc de silicone retardateur de flamme.

2. Utilisation selon la revendication 1, pour laquelle la couche de renforcement (2) est sur ses deux faces pourvue de la couche de caoutchouc de silicone retardatrice de flamme (3, 4).

3. Utilisation selon la revendication 1 ou 2, pour laquelle la feuille continue (1) comprend une feuille de renforcement (2) unique.

4. Utilisation selon l'une des revendications 1 à 3, pour laquelle une couche d'adhérence (5, 6) est disposée entre la couche de renforcement (2) et la couche de caoutchouc de silicone retardatrice de flamme (3, 4).

5. Utilisation selon les revendications 2, 3 et 4, pour laquelle la feuille continue (1) a une structure à cinq couches, et comprenant plus précisément une couche de renforcement (2) disposée en position centrale, une première et une deuxième couches de caoutchouc de silicone retardatrices de flamme (3, 4), et une première et une deuxième couches d'adhérence (5, 6).

6. Utilisation selon l'une des revendications 1 à 5, pour laquelle la couche de renforcement (2) est un tissu de verre ou un tissu de polyester.

7. Utilisation selon l'une des revendications 1 à 5, pour laquelle la couche de renforcement (2) est un tissu à base d'aramide.

8. Utilisation selon la revendication 7, pour laquelle la couche de renforcement (2) est un tissu à base de para-aramide et/ou de méta-aramide.

9. Utilisation selon l'une des revendications 1 à 8, pour laquelle la charge retardatrice de flamme est un carbonate métallique (Groupe A).

10. Utilisation selon la revendication 9, pour laquelle la charge retardatrice de flamme est le carbonate de calcium et/ou le carbonate de magnésium.

11. Utilisation selon l'une des revendications 1 à 8, pour laquelle la charge retardatrice de flamme est un hydroxyde métallique (Groupe B).

12. Utilisation selon la revendication 11, pour laquelle la charge retardatrice de flamme est l'hydroxyde de calcium et/ou l'hydroxyde de magnésium et/ou l'hydroxyde d'aluminium.

13. Utilisation selon l'une des revendications 1 à 8, pour laquelle la charge retardatrice de flamme est une poudre de verre et/ou une poudre de quartz (Groupe C).

14. Utilisation selon l'une des revendications 9 à 13, pour laquelle la charge retardatrice de flamme est une combinaison des matériaux inorganiques mentionnés ci-dessus (Groupes A, B, C).

15. Utilisation selon l'une des revendications 1 à 14, pour laquelle la proportion en poids de la charge retardatrice de flamme est de 60 à 120 phr.

16. Utilisation selon l'une des revendications 1 à 15, pour laquelle, outre la charge retardatrice de flamme, on introduit dans le mélange de caoutchouc de silicone des additifs supplémentaires, comprenant au moins un agent de réticulation et un stabilisant à la thermique, en particulier en liaison avec un auxiliaire de calandrage.

17. Utilisation selon la revendication 16, pour laquelle un agent de réticulation de type peroxyde est incorporé dans le mélange de caoutchouc de silicone.

18. Utilisation selon la revendication 16 ou 17, pour laquelle la proportion en poids des additifs est de 1 à 40 phr.

19. Utilisation selon la revendication 18, pour laquelle la proportion en poids des additifs est de 10 à 40 phr.

20. Utilisation selon l'une des revendications 1 à 19, pour laquelle on forme un soufflet à partir de la feuille continue multicouche (1).

21. Utilisation selon la revendication 20, pour laquelle le soufflet sert d'élément articulé pour des autobus, des véhicules sur rails et des passerelles pour passagers d'avion.
